# EUROPÄISCHE PATENTSCHRIFT

(11) **EP 3 065 534 B1**
(45) Veröffentlichungstag und Bekanntmachung des Hinweises auf die Patenterteilung: **28.02.2018**
(21) Anmeldenummer: 14798771.3
(22) Anmeldetag: 07.11.2014
(51) Int. Cl.: A01G 5/04

(54) **VORRICHTUNG ZUR HERSTELLUNG VON DEKO-GESTECKEN**
DEVICE FOR PRODUCING DECORATIVE ARRANGEMENTS
DISPOSITIF DE CONFECTION DE BOUQUETS DÉCORATIFS

(30) Priorität: 07.11.2013 LU 92304
(43) Veröffentlichungstag der Anmeldung: 14.09.2016
(73) Patentinhaber: Thoma, Christiane, 8352 Dahlem (LU)
(72) Erfinder: Thoma, Christiane, 8352 Dahlem (LU)
(74) Vertreter: Office Freylinger
(86) Internationale Anmeldenummer: PCT/EP2014/074086
(87) Internationale Veröffentlichungsnummer: WO 2015/067775

(56) Entgegenhaltungen:
- DE-A1- 3 139 172
- DE-U1- 20 314 819
- US-A- 5 878 788
- US-A1- 2011 045 315

## Beschreibung

### Technisches Gebiet

Die vorliegende Erfindung betrifft allgemein eine Vorrichtung zur Herstellung von Deko-Gestecken, zum Beispiel in Form von Kränzen, Blumen, Kreuzen, Rechtecken, Quadraten, Sternen und Herzen. Eine solche Vorrichtung ist z.B. aus Dokument DE 31 39 172 A1 bekannt.

### Aufgabe der Erfindung

Eine Aufgabe der vorliegenden Erfindung ist es, ein praktisches und einfaches Utensil zur schnellen Herstellung von Deko-Gestecken bereitzustellen.

### Allgemeine Beschreibung der Erfindung

Die vorliegende Erfindung stellt ein praktisches Utensil für jeden Floristiker, Pädagoge oder Hobby-Bastler bereit.

Die erfindungsgemäße Vorrichtung eignet sich zur Herstellung von Deko-Gestecken, insbesondere in Form von Kränzen, Blumen, Kreuzen, Rechtecken, Quadraten, Sternen und Herzen, und umfasst eine Hauptplatte, die mit einer Anzahl Kreisformen und einer Anzahl Bohrungen versehen ist, sowie ein Mittelteil das ein übers Kreuz eingeschnittenes obere Ende aufweist; und eine Anzahl Dübel die in die Bohrungen einsteckbar sind. Dübel im Sinne der Erfindung sind vorzugsweise zylinderförmige Stäbe, z.B. längliche Rundhölzer, die nach dem Einstecken in die Bohrungen aus der Hauptplatte herausragen.

Die Hauptplatte weist vorzugsweise an einer Oberfläche konzentrische Kreisformen auf, die von innen nach außen verlaufen, eine zentrale Bohrung sowie mehrere Bohrungen in den Kreisformen.

Das Mittelstück ist vorzugsweise so gestaltet, dass es auf die Hauptplatte aufsteckbar ist, bevorzugt in eine zentrale Bohrung.

Das Mittelteil ist bevorzugt ebenfalls zylindrisch, z.B. länglich und rundem Querschnitt. In einer Ausführungsform weist es ein gebohrtes untere Ende auf, wodurch es auf einen Dübel aufsteckbar ist. In einer Variante, ist das untere Ende dübelförmig und kann so direkt in eine Bohrung eingesetzt werden.

Die Einschnitte am oberen Ende des Mittelteils ermöglichen das einfache Einklemmen und Anlegen von einer oder mehreren Schnüren/Drähten. Die Anzahl der Einschnitte liegt vorzugsweise zwischen 2 und 10, insbesondere zwischen 3 und 6.

Mittels Verschieben und Feststecken des Mittelteils und der Dübeln kann die Deko-Gesteck-Größe und/oder -Form einfach festgelegt werden.

Die Hauptplatte sowie das Mittelteil und die Dübel können aus jedem geeigneten Material oder aus einer Kombination aus mehreren Materialien bestehen, z.B. aus Weichholz oder Hartholz sowie aus Thermoplaste oder Duroplaste bestehen.

### Kurze Beschreibung der Figuren

Im Folgenden wird nun eine Ausgestaltung der Erfindung anhand der beiliegenden Figuren beschrieben. Diese zeigen:
Fig. 1a eine Draufsicht auf eine bevorzugte Ausführungsform der Hauptplatte 1.
Fig. 1b ein Querschnitt einer bevorzugten Ausführungsform der Hauptplatte 1.
Fig. 2a einen Querschnitt des einer bevorzugten Ausführungsform des Mittelteils 5.
Fig. 2b eine Draufsicht auf eine bevorzugte Ausführungsform des Mittelteils 5.
Fig. 3-15 mehrere Draufsichten eine bevorzugte Ausführungsform der Vorrichtung mit der Hauptplatte 1, sowie aufgestecktem Mittelteil 5 und mehreren aufgesteckten Dübeln 8, wobei die verschiedene Aufsteckmuster die Herstellung von verschiedenen Formen und Größen von Deko-Gestecken erlauben.
Fig. 16 eine Serie von Fotos zur Illustration einer möglichen Verwendung einer bevorzugten Ausführungsform der Vorrichtung.

Weitere Einzelheiten und Vorteile der Erfindung können der nachfolgenden ausführlichen Beschreibung möglicher Ausführungsformen der Erfindung anhand der beiliegenden Figuren entnommen werden. Diese zeigen:

### Beschreibung einer/mehrerer Ausgestaltung(en) der Erfindung

Die Vorrichtung umfasst eine Platte, versehen mit Kreisformen, Bohrungen, ein Mittelteil, sowie eine Anzahl Dübeln.

Sie dient zum schnellen Herstellen von Deko-Gestecken z.B. in Form von: Kränzen, Blumen, Kreuzen, Rechtecken, Quadraten, Sternen und Herzen.

Nach dem Zusammensetzen (Einstecken der gewünschten Dübel) brauchen nur Schnüre oder Drähte in das obere Ende des Mittelteils eingeklemmt und auf der Hauptplatte zurechtgelegt zu werden, Zweige schichtweise überlappend hineingelegt bis das gewünschte Volumen erreicht ist, zusammengebunden und verknotet zu werden.

Dann wird das Gesteck aus der Vorrichtung entnommen und ist ggf. zum Weiterschmücken bereit.

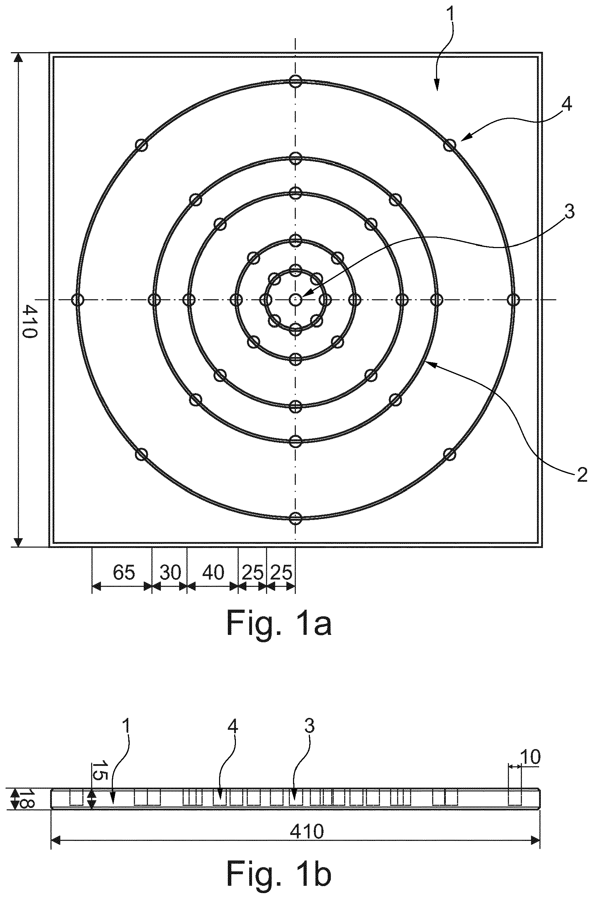

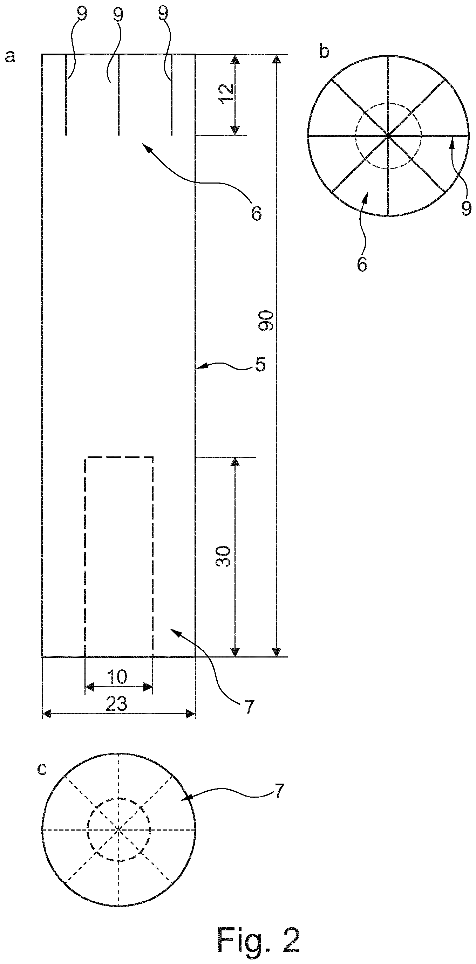

Eine Vorrichtung zur Herstellung von Deko-Gestecken, insbesondere in Form von Kränzen, Blumen, Kreuzen, Rechtecken, Quadraten, Sternen und Herzen, umfasst somit eine Hauptplatte 1 wie z.B. in Fig. 1 und ein Mittelteil 5 wie z.B. in Fig. 2 gezeigt. Die Hauptplatte 1 ist vorzugsweise quadratisch, ihre Oberfläche weist Kreisformen 2, die von innen nach außen verlaufen, eine Bohrung 3 im Zentrum und mehrere Bohrungen 4 in den Kreisformen auf. Die Hauptplatte 1 kann einen wesentliche Dicke/Höhe haben.

Das Mittelteil 5 (s. Fig. 2) weist darüber hinaus ein übers Kreuz eingeschnittenes obere Ende 6, das zum Einklemmen der Schnüre oder Drähte 10 dienen kann. Das Mittelteil 5 ist vorzugsweise länglich und rund.

Das Mittelteil 5 kann so gestaltet sein, dass es auf die Hauptplatte mit einem Dübel 8 festgesteckt werden kann, in welchem Fall es vorzugsweise ein gebohrtes untere Ende 7 aufweist.

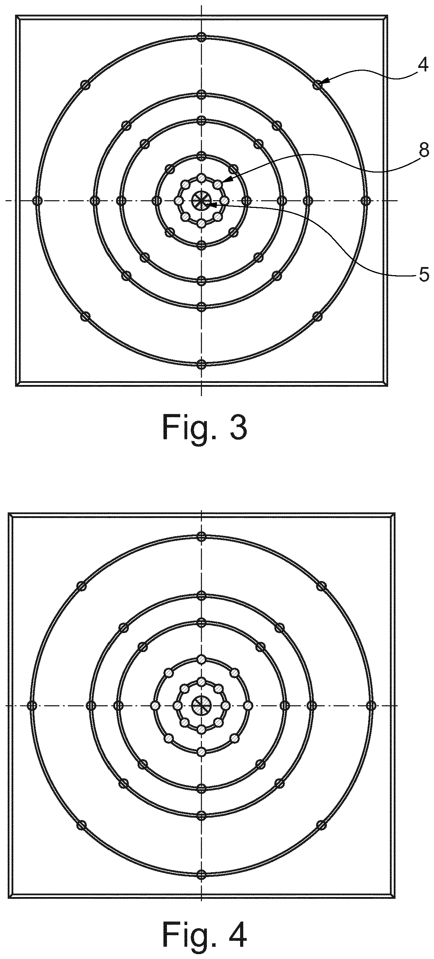

Die verschiedenen Deko-Gesteck-Größen und -Formen können durch das Verschieben und Feststecken des Mittelteils 5 und der Dübeln 8 wie in Fig.3-15 gezeigt festgelegt werden.

Die in den Figuren, zur Illustration der Erfindung, gezeigte Vorrichtung stellt eine bevorzugte Ausführungsform dar. Weder die Form der Hauptplatte 1 noch die Größenangaben sind als Einschränkung zu sehen. So kann die Hauplatte quadratisch wie in den Figuren gezeigt sein, andere zweckmäßige Formen, z.B. rund, oval, rechteckig oder mehreckig, sind jedoch ebenfalls möglich.

Fig. 1a ist eine Draufsicht auf eine Hauptplatte 1 einer erfindungsgemäßen Vorrichtung. Die Hauptplatte 1 weist mehrere konzentrische Kreisformen 2 auf. Auf diesen Kreisformen ist eine Anzahl von bevorzugt regelmäßig beabstandeten Bohrungen 4 vorgesehen. Dübel 8 können in einer Anzahl dieser Bohrungen 4 eingesteckt werden, wobei die Anordnung der Dübel 8 abhängig von der Größe und der Form des gewünschten Deko-Gestecks gewählt wird. Außerdem umfasst die Hauptplatte eine zentrale Bohrung 3 in welche das Mittelteil 5 gesteckt werden kann, entweder unmittelbar wenn dessen unteres Ende 7 eine passende Dübelform hat oder mittels eines Dübels 8 wenn dessen unteres Ende 7 eine Bohrung aufweist.

In Fig. 1b sind die (leeren) Bohrungen 3 und 4 in der Hauptplatte 1 dargestellt.

Fig. 2a, 2b und 2c zeigen eine mögliche Ausführungsform des Mittelteils 5, dessen oberes Ende 6 eine Anzahl (hier 4) Einschnitte 9 aufweist. Im unteren Teil 7 ist eine Bohrung vorgesehen womit sich das Mittelteil 5 auf einen Dübel aufstecken lässt. Meistens wird das Mittelteil (gegebenenfalls mittels eines Dübels) in die zentrale Bohrung 3 gesteckt, andere Positionen sind jedoch ebenfalls möglich.

In den Draufsichtfiguren sind leere Bohrungen als leere Kreise und Bohrungen in welche Dübel gesteckt sind dagegen als dunkel gefüllte Kreise dargestellt.

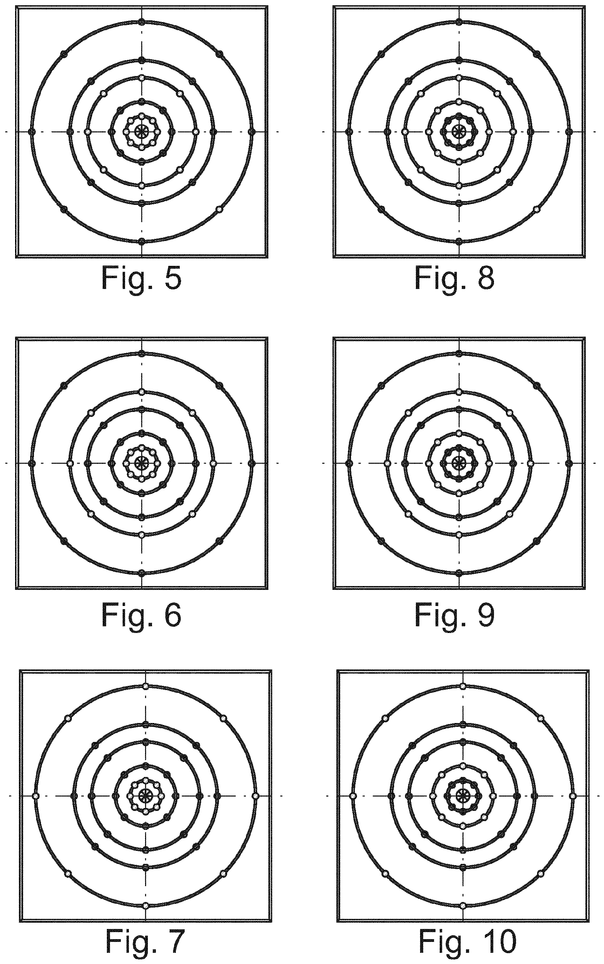

Die Fig. 3-13 zeigen bevorzugte Anordnungen der Dübel 8 (dunkel gefüllte Kreise) und des Mittelteils 5 (größere dunkel gefüllter Kreis, hier immer zentral auf der Hauptplatte 1 dargestellt). Je nach Anordnung kann man z.B. Serviettenringe (Fig. 3), Kerzenkränze (Fig. 4) oder generell Kränze verschiedener Größen (Fig. 5-13) herstellen.

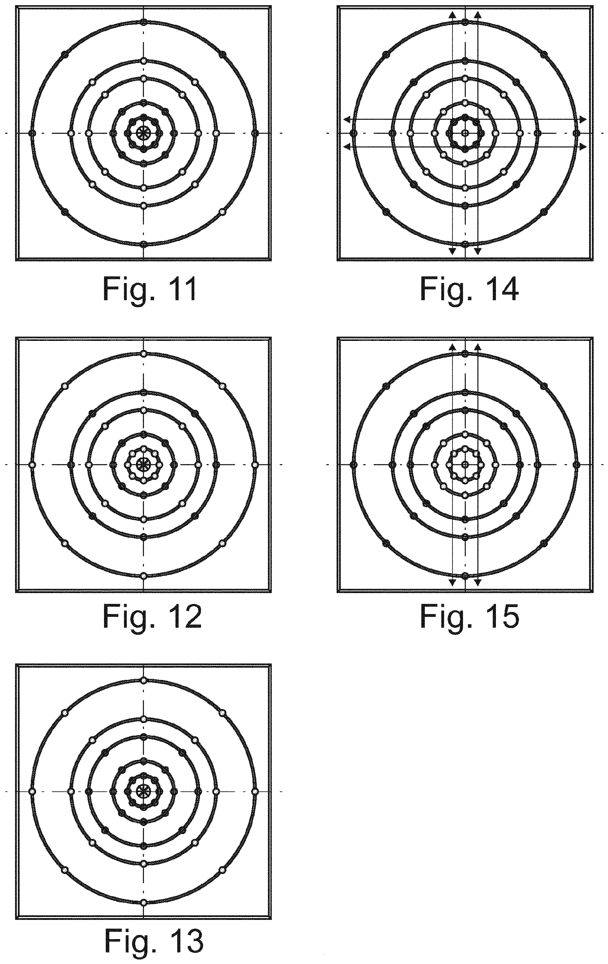

Die Fig. 14 und 15 zeigen bevorzugte Anordnungen der Dübel 8 (dunkel gefüllte Kreise) ohne Benutzung des Mittelteils 5 für die Herstellung von Kreuz- und Längsarrangements. Die Pfeile zeigen in diesen Fällen die bevorzugten Positionen der Schnüre/Drähte 10.

Die erfindungsgemäße Vorrichtung umfassend eine Hauptplatte 1 mit Kreisformen 2 und Bohrungen 3, 4, sowie ein Mittelteil 5 und eine Anzahl Dübel 8 ist sehr gut geeignet zum schnellen und einfachen Herstellen von kreativen Gestecken aus biegsamen Materialien wie Zweigen, Gräsern, Stoffe, Weichplastik, usw. zu Kränzen, Blumen, Kreuzen, Quadraten, Sternen und Herzen.

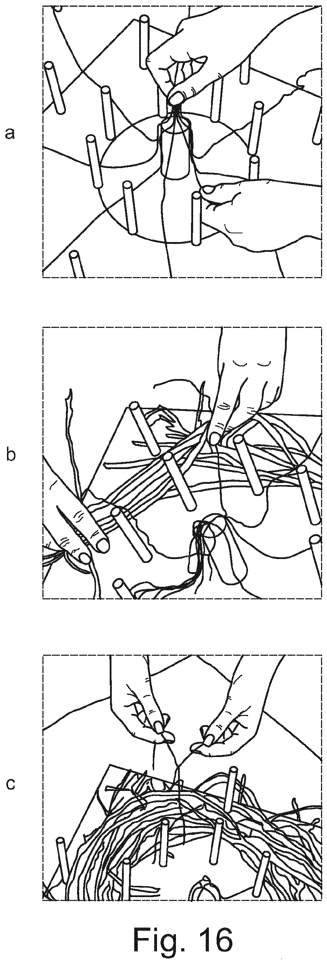

Wie in Fig. 16a-c dargestellt, wählt man zuerst die Größe und Form des Gestecks und steckt dementsprechend die Dübel und das Mittelteil auf die Hauptplatte ein. Anschließend legt man Schnüre und/oder Drähte auf die Hauptplatte entlang der Dübel zurecht und klemmt sie im Mittelteil ein (Fig. 16a). Zweige werden dann schichtweise überlappend hinein gelegt (Fig. 16b) bis das gewünschte Volumen erreicht wird, mittels der Schnüre/Drähte zusammengebunden und verknoten (Fig. 16c). Das Gesteck kann anschließend aus der Vorrichtung entnommen und ggf. weitergeschmückt werden.

### Zeichenerklärung:

- 1: Hauptplatte
- 2: Kreisformen
- 3: Bohrung (zentral)
- 4: Bohrung (auf Kreisform)
- 5: Mittelteil
- 6: Oberes Ende des Mittelteils
- 7: Unteres Ende des Mittelteils
- 8: Dübel/Rundholz
- 9: Einschnitte
- 10: Schnüre

## Patentansprüche

1. Vorrichtung zur Herstellung von Deko-Gestecken, insbesondere in Form von Kränzen, Blumen, Kreuzen, Rechtecken, Quadraten, Sternen und Herzen, wobei die Vorrichtung eine Hauptplatte (1) umfasst, die mit einer Anzahl Kreisformen (2) und einer Anzahl Bohrungen (3, 4) versehen ist, **gekennzeichnet durch** ein Mittelteil (5) das ein übers Kreuz eingeschnittenes obere Ende (6) aufweist; und eine Anzahl Dübel (8) die in die Bohrungen (3, 4) einsteckbar sind.

2. Vorrichtung nach Anspruch 1, wobei die Hauptplatte (1) an einer Oberfläche konzentrische Kreisformen (2), die von innen nach außen verlaufen, eine Zentrale Bohrung (3) sowie mehrere Bohrungen (4) in den Kreisformen (2) aufweist.

3. Vorrichtung nach Anspruch 1 oder 2, wobei das Mittelstück (5) so gestaltet ist, dass es auf die Hauptplatte (1) steckbar ist.

4. Vorrichtung nach einem der vorherigen Ansprüche, wobei das Mittelteil (5) länglich und rund ist und ein gebohrtes untere Ende (7) aufweist.

5. Vorrichtung nach einem der vorherigen Ansprüche, wobei die Einschnitte (9) am oberen Ende des Mittelteils (5), das Einklemmen und Anlegen von einer oder mehreren Schnüren (10) ermöglicht.

6. Vorrichtung nach einem der vorherigen Ansprüche, wobei mittels Verschieben und Feststecken des Mittelteils (5) und der Dübeln (8) die Deko-Gesteck-Größe und/oder -Form festgelegt werden kann.

7. Vorrichtung nach einem der vorherigen Ansprüche, wobei die Hauptplatte (1) sowie das Mittelteil (5) und die Dübel (8) aus Weichholz, Hartholz, Thermoplaste und/oder Duroplaste bestehen.

## Claims

1. A device for the production of decorative arrangements, particularly in the shape of wreaths, flowers, crosses, rectangles, squares, stars and hearts, in which the device consists of a main plate (1) which is provided with a number of circular shapes (2) and a number of holes (3, 4), **characterised by** a middle section (5) which has a crosswise incised upper end (6); and a number of pegs (8) that can be plugged in the holes (3, 4).

2. The device according to claim 1, in which the main plate (1) has concentric circular shapes on a surface (2) that run from the inside out, a central hole (3) as well as several holes (4) in the circular shapes (2).

3. The device according to claim 1 or 2, in which the middle piece (5) is formed such, that it can be plugged on the main plate (1).

4. The device according to one of the preceding claims, in which the middle section (5) is elongated and round and has a drilled lower end (7).

5. The device according to one of the preceding claims, in which the incisions (9) on the upper end of the middle section (5) enable the tucking and attaching of one or more strings (10).

6. The device according to one of the preceding claims, in which the size and/or the shape of the decorative arrangement can be defined by moving and securing the middle section (5) and the pegs (8).

7. The device according to one of the preceding claims, in which the main plate (1) as well as the middle section (5) and the pegs (8) consists of soft wood, hard wood, thermoplastic and/or thermosetting plastic

## Revendications

1. Dispositif de confection de bouquets décoratifs, en particulier sous forme de couronnes, de bouquets, de croix, de rectangles, de carrés, d'étoiles, et de coeurs, dans lequel le dispositif comprend une plaque principale (1), qui est munie d'un certain nombre de formes circulaires (2) et d'un certain nombre de trous (3, 4), **caractérisé par** une pièce médiane (5) qui présente une extrémité supérieure (6) entaillée en croix ; et un certain nombre de chevilles (8) qui peuvent être enfichées dans les trous (3, 4).

2. Dispositif selon la revendication 1, dans lequel la plaque principale (1) présente, au niveau d'une surface supérieure, des formes circulaires (2) concentriques qui vont de l'intérieur vers l'extérieur, un trou central (3), ainsi que plusieurs trous (4) présents dans les formes circulaires (2).

3. Dispositif selon la revendication 1 ou 2, dans lequel la pièce médiane (5) est conçue de telle manière qu'elle peut être enfichée sur la plaque principale (1).

4. Dispositif selon l'une quelconque des revendications précédentes, dans lequel la pièce médiane (5) est oblongue et ronde et présente une extrémité inférieure (7) perforée.

5. Dispositif selon l'une quelconque des revendications précédentes, dans lequel les entailles (9) présentes au niveau de l'extrémité supérieure de la pièce médiane (5) permettent le coinçage et la mise en place d'une ou plusieurs cordelette(s) (10).

6. Dispositif selon l'une quelconque des revendications précédentes, dans lequel la taille et/ou la forme du bouquet décoratif peut ou peuvent être déterminée(s) au moyen d'un déplacement et d'une fixation par enfoncement de la pièce médiane (5) et des chevilles (8).

7. Dispositif selon l'une quelconque des revendications précédentes, dans lequel la plaque principale (1) ainsi que la pièce médiane (5) et les chevilles (8) sont constituées de bois tendre, de bois dur, de matière thermoplastique et/ou de matière thermodurcissable.
